# EUROPEAN PATENT APPLICATION

(11) **EP 3 106 254 A1**
(43) Date of publication of application: **21.12.2016**
(21) Application number: 16172403.4
(22) Date of filing: 01.06.2016
(51) Int. Cl.: B23B 51/04, B26F 1/16, B26F 1/00

(54) **ANNULAR CUTTER**

(30) Priority: 08.06.2015 GB 201509875
(71) Applicant: NLB Engineering Limited, Harlow, Essex CM17 0PB (GB)
(72) Inventor: Heffernan, John Francis Steeple, Harlow, Essex CM17 PG (GB)
(74) Representative: Abraham, Richard

(57) **Abstract**

An annular cutter (10) comprising: a body (20) including a peripheral annular wall (30) having a leading end (34) defining a cutting surface (40), the cutting surface (40) being configured to rotate about a central longitudinal axis of the body (20) as the annular cutter (10) is advanced along the longitudinal axis in a cutter advancement direction; wherein the cutting surface (40) includes: a plurality of circumferentially spaced scalloped blade portions (42); and a plurality of recessed regions (44), each of the plurality of recessed regions (44) being provided circumferentially between a respective pair of the plurality of circumferentially spaced scalloped blade portions (42) and aligned along the longitudinal axis with at least a part of at least one scalloped blade portion of the plurality of circumferentially spaced scalloped blade portions (42).

## Description

The present invention relates to an annular cutter and particularly but not exclusively to an annular pipe cutter for cutting pipes used to convey fluids.

A variety of techniques are known in the art for creating a temporary blockage in a pressurised pipe conveying fluid (e.g. liquid or gas) to allow repair or upgrading of the pipe (e.g. to allow a control mechanism such as an isolation valve or thermostatically controlled valve to be inserted downstream of the temporary blockage). One preferred technique involves the use of an annular pipe cutter that is advanced by a rotary drive mechanism to remove a section of pipe. This technique is typically used in combination with a sealed enclosure placed around the pipe to prevent leakage of fluid from the pipe. When cutting the section of pipe, care may need to be taken to prevent swarf entering the pipe since this may lead to undesirable contamination of the conveyed system fluid (e.g. drinking water).

Annular pipe cutters used in the art typically comprise a cutter body including an peripheral annular wall defining a cutting surface that is configured to rotate around a longitudinal axis of the cutter body as the cutter is advanced along the longitudinal axis in a cutter advancement direction. The cutting surface typically comprises a saw-tooth arrangement comprising a plurality of circumferentially spaced teeth. The teeth may be "set" so as to produce a cut slot that is wider than the blade thickness to prevent sticking of the blade in the cut slot as the cutter cuts beyond the depth of the cutting surface. Despite the advantages of using such a saw-tooth arrangement, it has proven difficult to design a saw-tooth profile that is capable of providing a clean, dimensionally accurate cut in both hard (e.g. steel) and soft (e.g. plastic) pipes whilst at the same time minimising the risk of unwanted swarf entering the pipe.

The present applicant has identified the need for an improved annular cutter capable of providing a clean and dimensionally accurate cut with reduced risk of swarf contamination.

In accordance with the present invention, there is provided an annular cutter (e.g. annular pipe cutter) comprising: a body including a peripheral annular wall having a leading end defining a cutting surface, the cutting surface being configured to rotate about a central longitudinal axis of the body as the annular cutter is advanced along the longitudinal axis in a cutter advancement direction; wherein the cutting surface includes: a plurality of circumferentially spaced scalloped blade portions; and a plurality of recessed regions, each of the plurality of recessed regions being provided circumferentially between a respective pair of the plurality of circumferentially spaced scalloped blade portions and aligned along the longitudinal axis with at least a part of at least one scalloped blade portion of the plurality of circumferentially spaced scalloped blade portions (e.g. at least one of the respective pair of circumferentially spaced scalloped blade portions).

In this way, an annular cutter is provided having the cutting action of a scalloped blade that eliminates the need for a toothed "set" profile to prevent sticking by providing a series of recesses for collecting swarf during cutting. Advantageously, the scalloped blade portions provide for an undulation in approach ofthe cutting edge whereby the direction of blade meeting the material to be cut is angled to the direction of cut so a graduation of cutting edge is presented to the material. By careful selection of the scalloped blade profiles a clean, dimensionally accurate cut may be achieved in a variety of materials including soft and hard pipes without the cost or complexity of providing a set to the blade edge.

Typically the plurality of circumferentially spaced scalloped blade portions and recessed portions will extend substantially around the circumference of the cutting surface.

Typically each recessed portion will form in combination with the outer surface of the peripheral annular wall a sharp edge to assist with material removal.

In one embodiment, each of the plurality of recessed regions has a length in the axial direction substantially equal to or greater than the length in the axial direction of the at least one scalloped blade portion. In this way, the paring/swarf collection function of each recessed region may be optimised during rotation of the cutting surface.

In a first series of embodiments, each of the plurality of recessed regions comprises an aperture extending radially through the peripheral annular wall from an outer surface of the peripheral annular wall to an inner region of the body (e.g. inner swarf collection chamber). In this way, radially extending apertures are provided for guiding pared material from an outer surface of the peripheral annular wall to an inner region of the body thereby reducing risk of swarf entering the pipe. In one embodiment, the aperture extends from the outer surface of the peripheral annular wall to an inner surface of the peripheral annular wall (e.g. to an inner swarf collection chamber defined at least in part by the peripheral annular wall).

In one embodiment, each of the plurality of apertures comprises an axially extending slot extending from a leading edge ofthe cutting surface. In this way, apertures may be provided extending longitudinally along the full length of the scalloped blade portions to enhance removal of pared material from the outer surface of the peripheral annular wall.

In one embodiment, each of the plurality of apertures (e.g. plurality of slots) has a tapered cross-sectional profile (e.g. when viewed in a radial direction). The tapered profile may increase in cross-sectional width with increased axial distance from a leading edge ofthe cutting surface. In one embodiment, the tapered profile may subsequently decrease in cross-sectional width with increased axial distance from the leading edge of the cutting surface. In one embodiment, the tapered cross-sectional profile is a curved tapered profile. In one embodiment, each aperture may be formed by drilling through peripheral annular wall (e.g. with the aperture having a whole or part circular cross-sectional profile).

In one embodiment, the peripheral annular wall further defines at least one axially extending series of apertures (extending radially through the peripheral annular wall from the outer surface of the peripheral annular wall to the inner region of the body) or at least one axially extending elongate channel (e.g. formed in the outer surface of the peripheral annular wall). Advantageously, the provision of such apertures or channel allows for collection of pared material at points spaced longitudinally from the cutting surface to further assist swarf collection. In one embodiment, the at least one series of apertures or at least one elongate channel extends longitudinally. In another embodiment, the at least one series of apertures or at least one elongate channel extends in a spiral pattern.

In a second series of embodiments, each of the plurality of recessed regions comprises a channel formed in the outer surface of the peripheral annular wall. In one embodiment, each of the channels is an elongate channel extending in a longitudinal direction (e.g. extending substantially from the cutting surface (e.g. from the leading edge of the cutting surface) to a trailing end of the peripheral annular wall). In one embodiment, each elongate channel extends in a spiral pattern.

In one embodiment, the plurality of circumferentially spaced scalloped blade portions comprise a plurality of pairs of radially inwardly and radially outwardly facing scalloped blade portions. In this way, any tendency for the sloped face of the scalloped blade portions to deflect the cutter may be cancelled or at least minimised.

In one embodiment, each pair of radially inwardly and radially outwardly facing scalloped blade portions are substantially (e.g. substantially wholly) circumferentially aligned (e.g. and radially spaced).

In another embodiment, each pair of radially inwardly and radially outwardly facing scalloped blade portions are substantially (e.g. substantially wholly) circumferentially offset.

In one embodiment, each pair of scalloped blade portions is circumferentially spaced from its respective recessed region by at least one connecting region defining a cutting edge.

In one embodiment, the cutting edge comprises at least one or both of a radially inwardly facing tapered blade edge and a radially outwardly facing tapered blade edge. This pairing of inwardly and outwardly facing tapered blade edges is again intended to cancel or at least reduce the tendency of the inclined blade edge to deflect the cutter.

In one embodiment, the radially inwardly facing tapered blade edge has a length in the axial direction that is greater than a length of the radially outwardly facing tapered blade edge.

In one embodiment, the (acute) angle of taper of the radially outwardly facing tapered blade edge is greater than the angle of taper of the radially inwardly facing tapered blade edge. In this way, the smearing of the edge of the material being cut can be reduced or minimised.

Embodiments of the present invention will now be described by way of example with reference to the accompanying drawings, in which:
Figure 1 is a schematic perspective view of an annular pipe cutter in accordance with a first embodiment of the present invention;
Figure 2 is a schematic side view of the annular pipe cutter of Figure 1;
Figure 3 is a schematic plan view of the annular pipe cutter of Figure 1;
Figure 4 is a schematic perspective cross-sectional view of the annular pipe cutter of Figure 1 when in use cutting through a pipe;
Figure 5 is a schematic perspective view of an annular pipe cutter in accordance with a second embodiment of the present invention;
Figure 6 is a schematic perspective view of an annular pipe cutter in accordance with a third embodiment of the present invention; and
Figure 7 is a schematic perspective view of an annular pipe cutter in accordance with a fourth embodiment of the present invention.

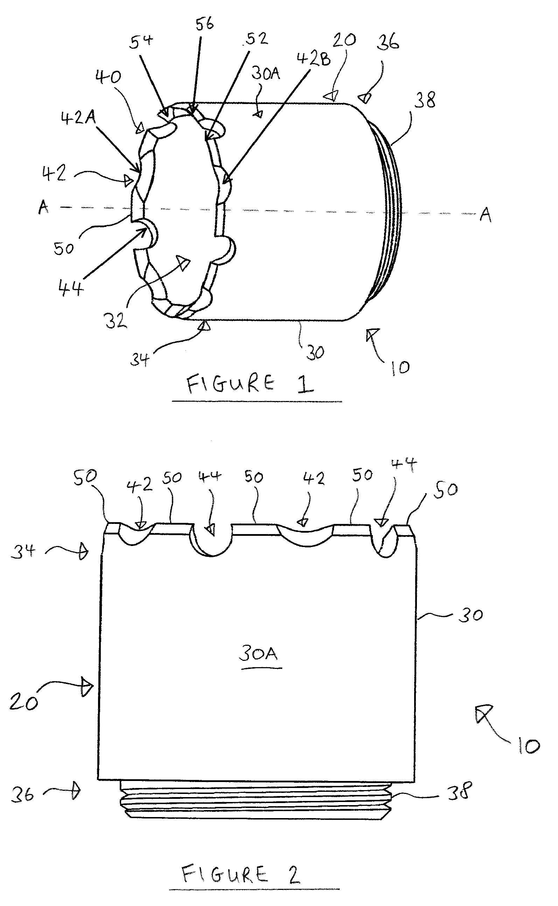

Figures 1-3 show an annular pipe cutter 10 comprising: a body 20 including a peripheral annular wall 30 defining a central recess 32. Peripheral annular wall 30 has a leading end 34 defining a cutting surface 40 and a trailing end 36 defining a screw-threaded portion 38 for engaging a rotary drive mechanism (not shown).

Cutting surface 40 is configured to rotate about a central longitudinal axis "A" of body 20 as the annular cutter 10 is advanced along the longitudinal axis "A" in a cutter advancement direction. Cutting surface 40 includes: a plurality of circumferentially spaced scalloped blade portions 42 formed by a circular profile ground at an angle into cutting surface 40; and a plurality of axially extending slots 44 extending radially through the peripheral annular wall 30 from an outer surface 30A of the peripheral annular wall 30 to inner recess 32. As illustrated, each slot 44 is provided circumferentially between a respective pair of the plurality of circumferentially spaced scalloped blade portions 42 and aligned along the longitudinal axis "A" with the respective pair of circumferentially spaced scalloped blade portions 42. Each slot 44 has a length in the axial direction greater than the length in the axial direction of the scalloped blade portions 42 (in this example over 50% greater in length). Slots 44 may be formed by drilling radially through peripheral annular wall 30 and can therefore be a cheap profile to insert during manufacturing of the cutter.

Each of the plurality of circumferentially spaced scalloped blade portions 42 comprises a pair of radially inwardly and radially outwardly facing scalloped blade portions 42A, 42B in a wholly circumferentially aligned configuration. The use of the scalloped profile advantageously provides an angled paring action whereby advancement of the cutting surface 40 results in the inner and outer facing scalloped blade portions 42A, 42B gradually being angled towards the pipe and initiates the paring action with further advancement increasing the depth of the scalloped blade portions into the pipe. The combination of radially inwardly and radially outwardly facing scalloped blade portions 42A, 42B assists in balancing the cutter against any tendency for the sloped face of the scalloped blade portions to deflect the cutter.

Each pair of scalloped blade portions 42 is circumferentially spaced from its respective slot 44 by connecting regions 50 defining a double-chamfered cutting edge 52. Each cutting edge 52 comprises radially inwardly facing tapered blade edge 54 and a radially outwardly facing tapered blade edge 56. As illustrated in Figure 1, radially inwardly facing tapered blade edge 54 has a length in the axial direction that is greater than a length of the radially outwardly facing tapered blade edge 56; the angle of taper of the radially outwardly facing tapered blade edge 56 is greater than the angle of taper of the radially inwardly facing tapered blade edge 54. The double-chamfered edge cutting edge 52 is designed so that the short steep outer edge 56 can be balanced with the longer more acutely angled inner edge 54 for the purpose of achieving a sharper and cleaner cut on the more acutely angled side but maintaining perpendicular forces resulting from side material contact in balance to prevent or reduce deflection of the cutter.

In order to prevent jamming in hard material (e.g. due to contact, friction and then expansion due to heat), plurality of slots 44 are provided to assist in removing material from the edges of the cut so as to accommodate the width of the peripheral annular wall 30 and permit cutting in hard materials at a depth beyond that of the cutting surface 40. Advantageously, slots 44 not only assist in preventing fouling of the cutting surface but also assist in guiding swarf away from outer surface 30A of the peripheral annular wall 30 towards inner recess 32 (where the swarf will be trapped by the leading end of the pipe being cut). In this way, risk of contamination of fluid in the pipe being cut may be significantly reduced.

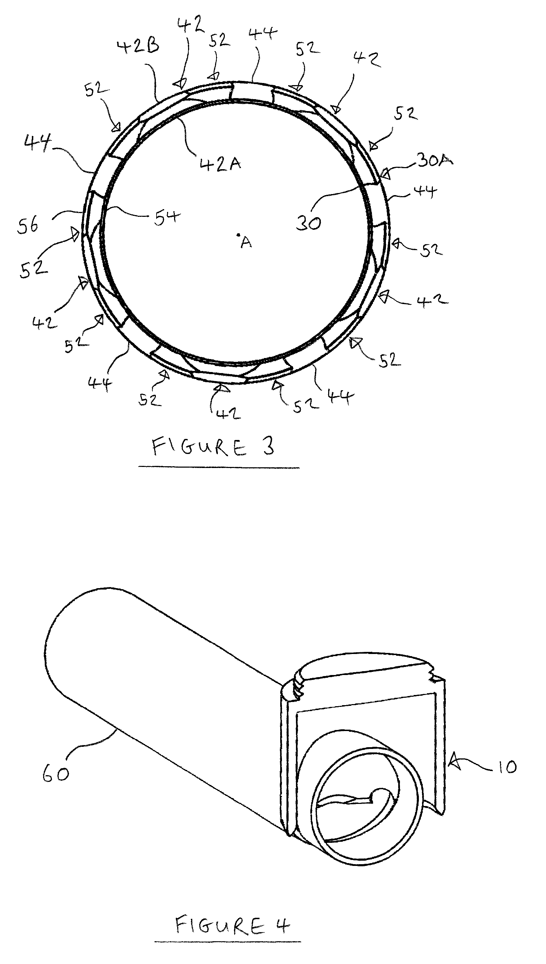

Figure 4 illustrates annular cutter 10 in use cutting through a pipe 60 to remove a section of the pipe. In use cutting edge 52 is rotatably advanced towards pipe 60 and tapered blade edges 54, 56 initiate the initial pairing action by contact with the outer surface of the pipe. As annular cutter 10 advances deeper into the pipe, inner and outer facing scalloped blade portions 42A, 42B pare the pipe material at a continuously varying angle. As annular cutter 10 further advances, slots 44 impinge the edge of the cut profile and assist in both removing material to the width of the peripheral annular wall 30 and directing pared material towards inner recess 32. Annular cutter 10 continues with this cutting action by advancing further into the pipe and clearing the cut profile width by virtue of continuing advancement of the three blade profiles as described.

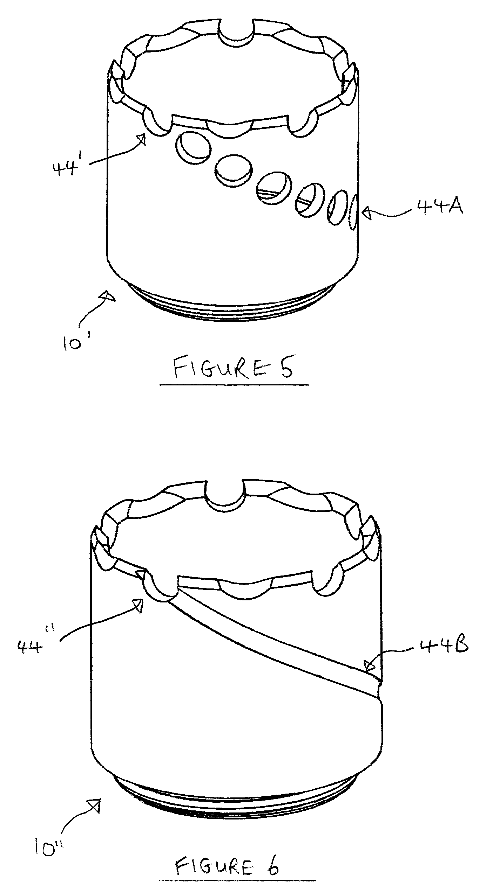

Figures 5 and 6 show alternative annular cutters 10' and 10" respectively based on annular cutter 10 but with the addition of: 1) an axially extending spiral of apertures 44A extending radially through the peripheral annular wall 30 from the outer surface 30A of the peripheral annular wall to inner recess 32; and 2) an axially extending spiral channel 44B formed in outer surface 30A of peripheral annular wall 30. Advantageously, the provision of apertures 44A or channel 44B allows for collection of pared material at points spaced longitudinally from cutting surface 40 to further assist swarf collection. Although only one spiral of apertures 44A and one spiral channel 44B are depicted in the figures, the skilled person will appreciate that one or more additional spiral of apertures or spiral channels may be provided. For example, a spiral of apertures or spiral channel may be provided in conjunction with each slot 44', 44" or (for example) every other slot.

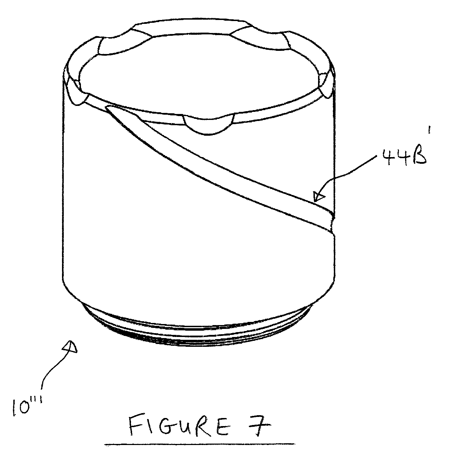

Figure 7 shows a further alternative annular cutter 10"' based on annular cutter 10" of Figure 6. In this embodiment slots 44" are omitted and the paring/swarf collection function is provided exclusively by a plurality of axially extending spiral channels 44B' (only one shown for simplicity) extending in a spiral along the peripheral annular wall from its leading end 34 to its trailing end 36.

## Claims

1. An annular cutter comprising:
a body including a peripheral annular wall having a leading end defining a cutting surface, the cutting surface being configured to rotate about a central longitudinal axis of the body as the annular cutter is advanced along the longitudinal axis in a cutter advancement direction;
wherein the cutting surface includes:
a plurality of circumferentially spaced scalloped blade portions; and
a plurality of recessed regions, each of the plurality of recessed regions being provided circumferentially between a respective pair ofthe plurality of circumferentially spaced scalloped blade portions and aligned along the longitudinal axis with at least a part of at least one scalloped blade portion of the plurality of circumferentially spaced scalloped blade portions.

2. An annular cutter according to claim 1, wherein each of the plurality of recessed regions has a length in the axial direction substantially equal to or greater than the length in the axial direction of the at least one scalloped blade portion.

3. An annular cutter according to claim 1 or claim 2, wherein each of the plurality of recessed regions comprises an aperture extending radially through the peripheral annular wall from an outer surface of the peripheral annular wall to an inner region of the body.

4. An annular cutter according to claim 3, wherein each aperture comprises an axially extending slot extending from a leading edge of the cutting surface.

5. An annular cutter according to claim 3 or claim 4, wherein the peripheral annular wall further defines at least one axially extending series of apertures or at least one axially extending elongate channel.

6. An annular cutter according to claim 5, wherein the at least one series of apertures or at least one elongate channel extends in a spiral pattern.

7. An annular cutter according to claim 1 or claim 2, wherein each of the plurality of recessed regions comprises a channel formed in the outer surface of the peripheral annular wall.

8. An annular cutter according to claim 7, wherein each of the channels is an elongate channel extending in a longitudinal direction.

9. An annular cutter according to claim 7, wherein each elongate channel extends in a spiral pattern.

10. An annular cutter according to any of the preceding claims, wherein the plurality of circumferentially spaced scalloped blade portions comprise a plurality of pairs of radially inwardly and radially outwardly facing scalloped blade portions.

11. An annular cutter according to any of the preceding claims, wherein each pair of scalloped blade portions is circumferentially spaced from its respective recessed region by at least one connecting region defining a cutting edge.

12. An annular cutter according to claim 11, wherein the cutting edge comprises at least one or both of a radially inwardly facing tapered blade edge and a radially outwardly facing tapered blade edge.

13. An annular cutter according to claim 12, wherein the radially inwardly facing tapered blade edge has a length in the axial direction that is greater than a length of the radially outwardly facing tapered blade edge.

14. An annular cutter according to claim 12 or claim 13, wherein the angle of taper of the radially outwardly facing tapered blade edge is greater than the angle of taper of the radially inwardly facing tapered blade edge.
